(19) Europäisches Patentamt

European Patent Office

Office européen des brevets

(11) **EP 4 783 132 A1**

(12) **DEMANDE DE BREVET EUROPEEN**

(43) Date de publication:
**29.07.2026 Bulletin 2026/31**

(51) Classification Internationale des Brevets (IPC):
*G06V 40/12* (2022.01)

(21) Numéro de dépôt: **25191352.1**

(22) Date de dépôt: **23.07.2025**

(52) Classification Coopérative des Brevets (CPC):
**G06V 40/1347; G06V 40/1335**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **23.01.2025 FR 2500689**

(71) Demandeur: **Idemia Public Security France
92400 Courbevoie (FR)**

(72) Inventeurs:
• KAZDAGHLI, Laurent
  92400 COURBEVOIE (FR)
• VIDEAU, Victor
  92400 COURBEVOIE (FR)
• NIAF, Emilie
  92400 COURBEVOIE (FR)

(74) Mandataire: **IPS
2, place Samuel de Champlain
92400 Courbevoie (FR)**

(54) **PROCÉDÉ ET DISPOSITIF DE RECONSTRUCTION D'UNE IMAGE PANORAMIQUE D'UN DACTYLOGRAMME**

(57)    Procédé (**500**), mis en œuvre par un dispositif (**200**) de traitement de données, de reconstruction d'une image panoramique (**403**) d'un dactylogramme digital à partir d'au moins deux images (**401, 402**) d'un doigt (**300**) acquises selon des angles de vue différents, le procédé (**500**) comprend les étapes suivantes :

(a) Déterminer (**501**) des points caractéristiques communs (**601, 602**) entre les deux images (**401, 402**) ;

(b) Déterminer (**502**) une transformation géométrique globale (**TGG**) de manière à associer les points caractéristiques communs (**601, 602**) entre les images (**401, 402**) par minimisation d'une erreur résiduelle ($\varepsilon$) entre les positions desdits points caractéristiques communs (**601, 602**) entre les images (**401, 402**) ;

(c) Sélectionner (**503**) les points caractéristiques communs (**701, 702**) pour lesquels l'erreur résiduelle $\varepsilon$ est inférieure à une valeur de seuil donnée ($\sigma$);

(d) Déterminer (**504**), à partir de la transformation géométrique globale (**TGG**), une transformation géométrique globale modifiée (**m-TGG**) de manière à associer uniquement les points caractéristiques communs sélectionnés (**701, 702**) ;

(e) Déterminer (**505**), pour chaque image (**401, 402**), une ligne (**L**) de démarcation passant par les zones de l'image présentant la plus grande densité de points caractéristiques communs sélectionnés (**701, 702**) ;

(f) Joindre (**506**) les images le long de la ligne (**L**) de démarcation en appliquant la transformation géométrique globale modifiée (**m-TGG**) pour former une image panoramique (**403**).

## Description

### Domaine technique

La présente invention concerne un procédé et un dispositif de reconstruction d'une image panoramique d'un dactylogramme

### Arrière-plan technique

La dactyloscopie est un procédé d'identification des individus fondée sur l'exploitation des dactylogrammes, également connus sous les expressions « d'empreintes papillaires » comprenant les « empreintes digitales » et les « empreintes palmaires ». Ce procédé est notamment utilisé par les services d'anthropométrie judiciaire ou par les systèmes civils d'identification lors, par exemple, des démarches administratives, de passage aux frontières ou d'accès à des lieux sécurisés

Les dactylogrammes sont des dessins que forment les traces laissées sur les surfaces par les dermatoglyphes des doigts et/ou des paumes de main. Les dermatoglyphes sont les sillons superficiels formés sur les paumes, les plantes et la pulpe des doigts par les crêtes dermiques et disposés en lignes ou spirales. Ils sont propres à chaque individu. Les dessins qu'ils forment constituent une « carte d'identité » anthropométrique de chaque individu grâce à laquelle il peut être identifié.

Il est courant de procéder à l'acquisition d'un dactylogramme digital à l'aide d'un dispositif optique capable d'acquérir une image résolue des dermatoglyphes. Il est possible de distinguer entre les dispositifs d'acquisition par contact où un ou plusieurs doigts sont placés sur une surface d'acquisition (Maillard, Poitelon, et Dumont 2022; Trouboul 2020), et les dispositifs d'acquisition sans contact où un ou plusieurs doigts sont placés dans le champ de vision d'un ou plusieurs appareils optiques (Fourre et al. 2009; Fourre, Beaudet, et Sireta 2022; Bezot et al. 2024).

Un des principaux intérêts des dispositifs d'acquisition par contact est la possibilité d'acquérir des dactylogrammes digitaux complets comprenant les dessins des dermatoglyphes depuis les deux bords des doigts. Ces dactylogrammes, dits « roulés », « enroulés » ou « déroulés » (« rolled fingerprint ») sont obtenus en faisant rouler chaque doigt sur la surface d'acquisition, d'un bord à l'autre de l'ongle selon son axe longitudinal. Si, leur acquisition requiert du temps et une certaine rigueur, ce type de dactylogrammes font généralement office de référence en raison de leur complétude.

En raison leur meilleure ergonomie, la simplicité de leur utilisation et la possibilité d'acquérir des dactylogrammes de plusieurs doigts simultanément, les dispositifs d'acquisition sans contact sont plus couramment utilisés. Ils permettent d'acquérir des dactylogrammes dits « plats » qui comprennent essentiellement le dessin des dermatoglyphes de la région centrale de la pulpe de la phalange distale des doigts. Cependant, un inconvénient majeur de ces dispositifs d'acquisition sans contact est la difficulté d'obtenir des dactylogrammes « déroulés » dont la résolution est suffisante pour permettre notamment leur comparaison avec les dactylogrammes d'une base de données de dactylogrammes « déroulés » de référence lors, par exemple, d'une opération d'identification par les services judiciaires.

Il existe des méthodes de reconstruction d'un dactylogramme par mise en mosaïque de plusieurs images partielles.

Une première méthode consiste à extraire un ensemble de points caractéristiques de chacune des deux images, à identifier des points caractéristiques communs entre les ensembles de points caractéristiques, à déterminer des paramètres de conversion sur la base des points caractéristiques communs, à transposer les points caractéristiques des deux images dans un même référentiel à l'aide des paramètres de conversion, faire chevaucher les deux ensembles sur la base des points caractéristiques transposés (Russo 2003).

Une deuxième méthode consiste à extraire les points caractéristiques des deux images, à calculer l'orientation des points caractéristiques, à ajouter des points simulés en fonction de l'orientation des points caractéristiques, à enregistrer les ensembles de points caractéristiques à l'aide de l'algorithme ICP (« Iterative Closest Point ») et, enfin, à combiner les points caractéristiques en un modèle de dactylogramme (Rahmes, Mayron, et Allen 2010).

Une troisième méthode consiste à extraire, à partir de chaque image partielle, des points caractéristiques, à calculer un vecteur descripteur pour chaque point caractéristique, évaluer un score d'association sur la base des points caractéristiques et de leurs vecteurs descripteurs, et à assembler les parties d'images pour lesquelles le score d'association est le plus élevé (Niaf et Girard 2020).

Toutefois, ces méthodes ne sont pas adaptées obtenir des dactylogrammes « déroulés » à partir de plusieurs images obtenues par un dispositif d'acquisition sans contact.

### Résumé de l'invention

Un premier aspect de l'invention concerne un procédé, mis en œuvre par un dispositif de traitement de données, de reconstruction d'une image panoramique d'un dactylogramme digital à partir d'au moins deux images d'un doigt acquises selon des angles de vue différents, le procédé comprend les étapes suivantes :

   (a) Déterminer des points caractéristiques communs entre les deux images ;
   (b) Déterminer une transformation géométrique globale de manière à associer les points caractéristiques communs entre les images par minimisation d'une erreur résiduelle entre les positions desdits points caractéristiques communs entre les images ;

(c) Sélectionner les points caractéristiques communs pour lesquels l'erreur résiduelle est inférieure à une valeur de seuil donnée ;

(d) Déterminer, à partir de la transformation géométrique globale, une transformation géométrique globale modifiée de manière à associer uniquement les points caractéristiques communs sélectionnés ;

(e) Déterminer, pour chaque image, une ligne de démarcation passant par les zones de l'image présentant la plus grande densité de points caractéristiques communs sélectionnés ;

(f) Joindre les images le long de la ligne de démarcation en appliquant la transformation géométrique globale modifiée pour former une image panoramique.

Selon certains modes de réalisation, l'étape de transformation géométrique globale modifiée comprend une sous-étape étape de calcul d'une carte de densité locale des points caractéristiques communs sélectionnés de chaque image, la ligne de démarcation passe par les maxima de la carte de densité locale.

Selon certains modes de réalisation, la ligne de démarcation s'étend dans la direction de l'axe longitudinal du doigt.

Selon certains modes de réalisation, les angles de vue des images sont définis par rapport à l'axe longitudinal du doigt.

Selon certains modes de réalisation, la valeur de seuil est définie par la somme quadratiques des erreurs résiduelles entre les positions des points caractéristiques communs associés entre les images lors de l'étape de détermination de la transformation géométrique globale.

Un deuxième aspect de l'invention concerne un dispositif de traitement de donnée comprenant des moyens pour la mise en œuvre d'un procédé de reconstruction d'une image panoramique d'un dactylogramme selon l'un quelconques des modes de réalisation du premier aspect de l'invention.

Un troisième aspect de l'invention concerne un programme d'ordinateur comprenant des instructions qui, lorsqu'elles sont exécutées par un dispositif de traitement de données, conduisent ledit dispositif à mettre en œuvre un procédé de reconstruction d'une image panoramique d'un dactylogramme selon l'un quelconque des modes de réalisation du premier aspect de l'invention.

Un quatrième aspect de l'invention concerne un procédé d'acquisition d'une image panoramique d'un dactylogramme d'un doigt, le procédé comprend :

- Acquérir au moins deux images d'un dactylogramme d'un doigt selon des angles de vue différents ;
- Construire une image panoramique d'un dactylogramme à l'aide d'un procédé de reconstruction d'une image panoramique d'un dactylogramme selon l'un quelconque des modes de réalisation du premier aspect de l'invention.

Un cinquième aspect de l'invention concerne un système d'acquisition de dactylogramme comprenant :

- un dispositif d'acquisition, de préférence sans contact, de dactylogrammes, configuré pour acquérir au moins deux images d'un doigt selon des angles de vue différents ;
- un dispositif de traitement de données selon le deuxième aspect de l'invention.

**Brève description des dessins**

**Fig. 1** est une représentation schématique d'un système d'acquisition de dactylogrammes digitaux sans contact.

**Fig. 2** est une représentation schématique d'un dispositif de traitement de données.

**Fig. 3** est une représentation schématique d'un doigt d'une main.

**Fig. 4** est une représentation schématique de deux images d'un dactylogramme digital acquises selon des angles de vue différents à l'aide d'un système d'acquisition tel que celui de la **Fig. 1.**

**Fig. 5** est un ordinogramme d'un procédé de reconstruction d'une image panoramique d'un dactylogramme conformément au premier aspect de l'invention.

**Fig. 6** est une représentation schématique d'une détermination de points caractéristiques communs entre deux images d'un dactylogramme digital et de leur association par une transformation géométrique globale.

**Fig. 7** est une représentation schématique d'une sélection de points caractéristiques communs entre deux images d'un dactylogramme digital et de leur association par une transformation géométrique globale modifiée.

**Fig. 8** est une représentation schématique d'une ligne de démarcation passant par les zones de deux images d'un dactylogramme digital présentant la plus grande densité de points caractéristiques communs sélectionnés.

**Fig. 9** est une représentation schématique d'une jonction deux images d'un dactylogramme digital le long d'une ligne de démarcation.

**Description détaillée des modes de réalisation**

Dans le cadre de la présente divulgation, les modes de réalisation sont décrits dans le contexte général d'un ou plusieurs matériels, dispositifs ou systèmes capables d'exécuter des instructions préchargées telles que, par exemple, des instructions exécutables par ordinateur pour l'exécution de modules de programme. Les modules de programme peuvent comprendre une ou plusieurs routines, programmes, objets, variables, commandes, scripts, fonctions, applications, composants, structures de données qui peuvent exécuter des tâches particulières ou mettre en œuvre des types particuliers de données abstraites.

Certains modes de réalisation peuvent également être mis en œuvre dans des environnements informatiques distribués où les tâches sont exécutées par des dispositifs distants de traitement de données qui sont reliés par un réseau de communication. Dans un environnement informatique distribué, les modules de programme peuvent se trouver sur des supports de stockage informatique locaux et/ou distants, y compris des dispositifs de stockage mémoire.

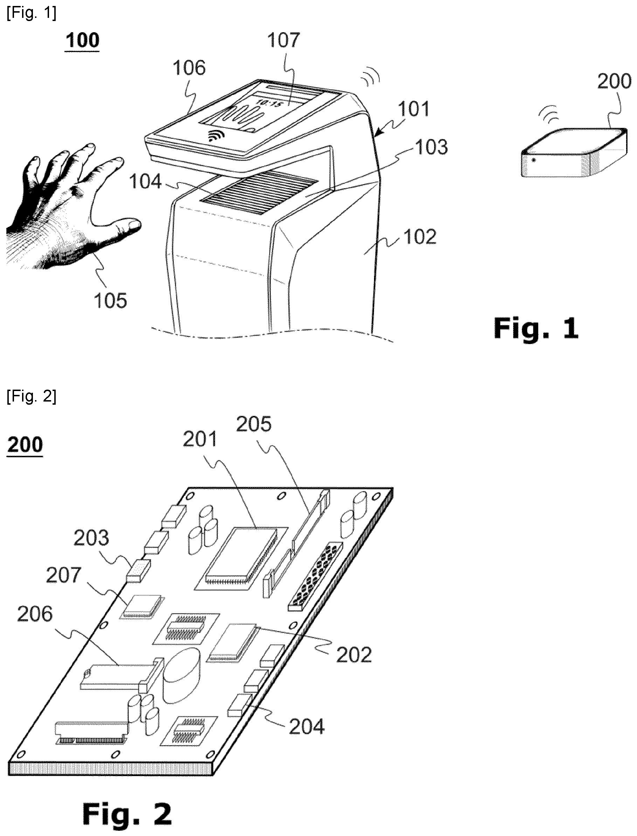

En référence à la **Fig. 1,** un système **100** d'acquisition de dactylogrammes digitaux sans contact comprend généralement un dispositif **101** d'acquisition sans contact d'images de dactylogrammes digitaux et un dispositif **200** de traitement de données configuré pour recevoir et traiter les images acquises par le dispositif **101** d'acquisition.

Selon un exemple illustratif (Fourre, Beaudet, et Sireta 2022), le dispositif **101** d'acquisition sans contact comprend un caisson **102** dont la face supérieure **103** est munie d'une surface **104** d'acquisition. Dès lors qu'un individu (non représenté) positionne sa main **105** au-dessus de la surface **104** d'acquisition, le dispositif **101** procède à l'acquisition des dactylogrammes digitaux des doigts de ladite main **105.** Deux modes d'acquisition sont possibles. Dans le mode d'acquisition statique, la main **105** est placée au-dessus de la surface **104** d'acquisition de manière quasi-immobile pendant quelques secondes. Dans le mode dynamique, la main **105** se déplace latéralement au-dessus de la surface **104** d'acquisition selon un mouvement de « balayage ».

Le dispositif **101** d'acquisition peut comprendre en outre une plateforme **106** surmontant la surface **104** d'acquisition. La plateforme **106** est positionnée à une certaine distance de la surface **104** d'acquisition de manière à former une ouverture débouchant frontalement et latéralement pour faciliter et guider le déplacement de la main 105 de l'individu **105** au-dessus de ladite surface **104.** La plateforme **106** a pour fonction de réduire la quantité de lumière extérieure susceptible de pénétrer ladite surface **104** et ainsi améliorer le contraste des dactylogrammes digitaux acquis. La plateforme **106** peut être munie d'une interface homme-machine sous la forme d'un dispositif **107** d'affichage, éventuellement tactile, permettant d'afficher des instructions d'utilisation à destination de l'individu et/ou lui envoyer des notifications.

Dans le caisson **102,** sous la surface **104** d'acquisition, une source d'éclairage (non représentée) permet d'illuminer la main **105** de l'individu lors de son passage, et un dispositif vidéographique ou photographique (non représenté) permet d'acquérir un ou plusieurs dactylogrammes digitaux par la collecte de la lumière réfléchie par les doigts de la main **105.** Que l'acquisition soit statique ou dynamique, le dispositif vidéographique ou photographique est configuré pour acquérir les dactylogrammes digitaux selon des angles de vue différents pour des raisons de complétude.

En référence à la **Fig. 2,** le dispositif **200** de traitement de données est chargé d'exécuter automatiquement des séquences d'opérations arithmétiques ou logiques pour réaliser des tâches ou des actions. Ce dispositif, communément appelé ordinateur, peut comprendre une ou plusieurs unités centrales de traitement (CPU) **201** et/ou un ou plusieurs processeurs graphiques (GPU) **202,** un module physique **203** de communication à distance, un ou plusieurs modules physique **204** d'entrée / sortie pour l'échanges de données avec des dispositifs externes, un support **205** de stockage transitoire tel qu'une mémoire vive (RAM), un support **206** d'enregistrement non-transitoire, et des bus de communication (non représentés) pour le transfert de données entre les composants internes du dispositif. Il peut également comprendre un élément sécurisé **207** pour le stockage de clés cryptographiques, l'exécution d'algorithmes de chiffrement, et/ou le stockage et/ou le chiffrement de tout autre algorithme et/ou donnée dont la sécurité et la confidentialité doit être préservées.

Le dispositif **200** de traitement de données permet l'exécution d'un ou plusieurs programmes ou modules de programmes comprenant des instructions qui, lorsque le ou les modules de programme sont exécutés, conduisent ledit dispositif **200** de traitement de données à mettre en œuvre un traitement des images acquises par le dispositif **200** d'acquisition. Le ou les modules de programme peuvent être écrits en tout langage de programmation, compilé ou interprété. Ils peuvent faire partie d'une solution logicielle, c'est-à-dire d'une collection d'instructions exécutables, de codes, de scripts ou autres et/ou de bases de données.

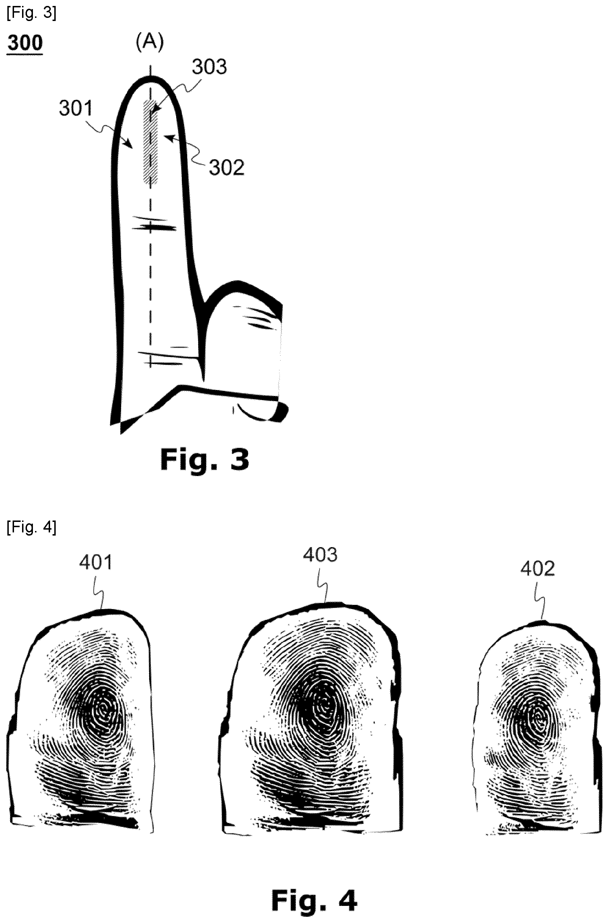

En référence à la **Fig. 3,** un doigt **300** d'une main a une forme sensiblement cylindrique selon son axe longitudinal **(A).** Du point de vue de l'individu, il peut être distingué une partie droite **301** s'étendant approximativement de la région centrale **303** de la pulpe de la phalange distale au bord droit de l'ongle, et une partie gauche **302** s'étendant approximativement de la région centrale **303** de la pulpe de la phalange distale au bord gauche de l'ongle. Lors de l'acquisition du dactylogramme, la partie **301, 302** du doigt la plus proche de la surface **104** d'acquisition du dispositif 101 d'acquisition et/ou situé dans l'axe optique du dispositif vidéographique ou photographique sous-jacent apparaitra plus distinctement que l'autre.

Cet effet de perspective se manifeste notamment par une représentation plus importante du dactylogramme par la partie du doigt **301, 302** la plus proche de la surface **104** d'acquisition du dispositif **101** d'acquisition et/ou de l'axe optique du dispositif vidéographique ou photographique sous-jacent et un resserrement de la largeur des sillons dans la zone du dactylogramme correspondant à la partie du doigt **301, 302** la plus éloignée. A titre d'exemple, en référence à la **Fig. 4,** pour un dispositif **101** d'acquisition sans contact configuré pour acquérir des images d'un dactylogramme d'un doigt selon au moins deux angles de vue différents, il peut être obtenu deux images **401, 402** d'un dactylogramme, chacune d'elle représentant respectivement et majoritairement la partie gauche **302** et la partie droite **301** d'un doigt **300**. De préférence, les angles de vue des images **401, 402** sont définis par rapport à l'axe longitudinal **(A)** du doigt **300.**

Sur la **Fig. 4,** l'image centrale **403** est une image panoramique du dactylogramme du doigt reconstruite à partir des deux images **401, 402** du doigt **300** acquises selon des angles de vue différents. Cette image **403** est équivalente à l'image d'un dactylogramme « déroulé » tel qu'il est susceptible d'en obtenir avec un dispositif d'acquisition avec contact. Elle est obtenue à l'aide d'un procédé de reconstruction selon le premier aspect de l'invention.

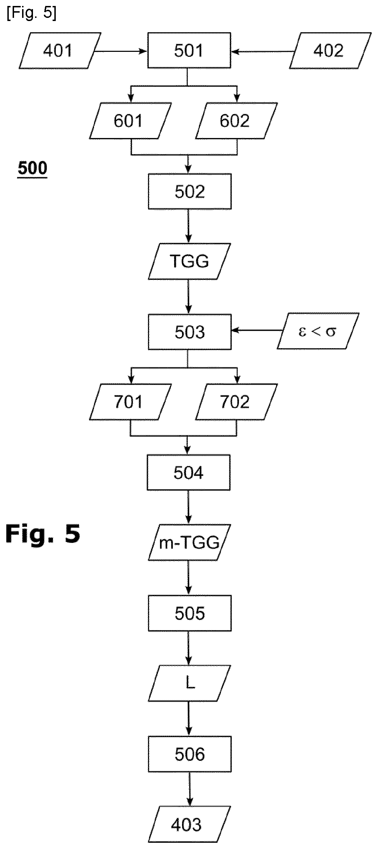

En référence aux **Fig. 5-9,** le premier aspect de l'invention concerne un procédé **500,** mis en œuvre par un dispositif **200** de traitement de données, de reconstruction d'une image panoramique **403** d'un dactylogramme digital à partir d'au moins deux images **401, 402** d'un doigt **300** acquises selon des angles de vue différents. Le procédé **500** comprend les étapes suivantes :

(a) Déterminer **501** des points caractéristiques communs **601, 602** entre les deux images **401, 402 ;**

(b) Déterminer **502** une transformation géométrique globale **TGG** de manière à associer les points caractéristiques communs **601, 602** entre les images **401, 402** par minimisation d'une erreur résiduelle $\varepsilon$ entre les positions desdits points caractéristiques communs **601, 602** entre les images **401, 402 ;**

(c) Sélectionner **503** les points caractéristiques communs **701, 702** pour lesquels l'erreur résiduelle $\varepsilon$ est inférieure à une valeur de seuil donnée $\sigma$ **;**

(d) Déterminer **504,** à partir de la transformation géométrique globale **TGG,** un transformation géométrique globale modifiée **m-TGG** de manière à associer uniquement les points caractéristiques communs sélectionnés **701, 702 ;**

(e) Déterminer **505,** pour chaque image **401, 402,** une ligne L de démarcation passant par les zones de l'image présentant la plus grande densité de points caractéristiques communs sélectionnés **701, 702 ;**

(f) Joindre **506** les images le long de la ligne **L** de démarcation en appliquant la transformation géométrique globale modifiée **m-TGG** pour former une image panoramique **403.**

A l'étape **501,** les points caractéristiques **601, 602** communs les deux images **401, 402** peuvent être déterminés à l'aide de toute méthode adaptée. Des exemples d'algorithmes sont les algorithmes de type descripteur / détecteurs tels que SIFT (Lowe 1999), SURF (Bay, Tuytelaars, et Van Gool 2006), BRIEF et ORB (Karami, Prasad, et Shehata 2017; Ma et al. 2021), ou les algorithmes de type réseau de neurones, tels que les réseaux de neurones SIAMESE (Hanif 2019).

Selon la méthode utilisée pour la détermination des points caractéristiques **601, 602** communs, il est possible que certains points caractéristiques entre les deux images **401, 402** soient appariés sans qu'ils relèvent des sillons et/ou des crêtes du dactylogramme. C'est notamment le cas pour les points situés en bordure des images **401, 402** du dactylogramme, et correspondant à l'extrême bord des doigts. Ces points, dits « points de bord » peuvent ne présenter de similitude que parce qu'ils sont situés au bord des doigts, sans lien avec les sillons et/ou des crêtes du dactylogramme. Ils peuvent donc être avantageusement supprimés.

A l'étape 502, une transformation géométrique globale TGG est déterminée de manière à associer les points caractéristiques communs **601, 602** entre les images **401, 402.** Par exemple, il s'agit de déterminer la transformation géométrique global **TGG** qui permet d'associer les points caractéristiques communs **601** de l'image **401** avec les points caractéristiques communs **602** correspondants de l'image **402** sur la base, par exemple, d'un score de correspondance calculé entre les vecteurs descripteurs de ces points **601, 602** lorsqu'ils sont déterminés à l'aide d'un algorithme de type descripteur / détecteurs tels que décrits précédemment. En d'autres termes, la transformation géométrique globale TGG est telle qu'elle minimise les scores de correspondance entre les vecteurs descripteurs des points caractéristiques communs **601, 602** entre les images **401, 402 ;** ce qui est équivalent à minimisation d'une erreur résiduelle $\varepsilon$ entre les positions desdits points caractéristiques communs **601, 602.** La transformation géométrique global **TGG** peut alors être notamment une rotation, une translation et/ou une homothétie.

L'association des points caractéristiques communs **601, 602** entre les images **401, 402** peut être réalisée à l'aide de toutes méthodes adaptées tels que les méthodes de correspondance ponctuelle, dites « point-wise matching » (J. Chen et Moon 2008; Park, Pankanti, et Jain 2008), les algorithmes de type « RANdom SAmple Consensus » (Fischler et Bolles 1981), de type « Iterative Closest Point » (Y. Chen et Medioni 1992; Zhang 1994) ou « Thin-Plate Splines » (Donato et Belongie 2002).

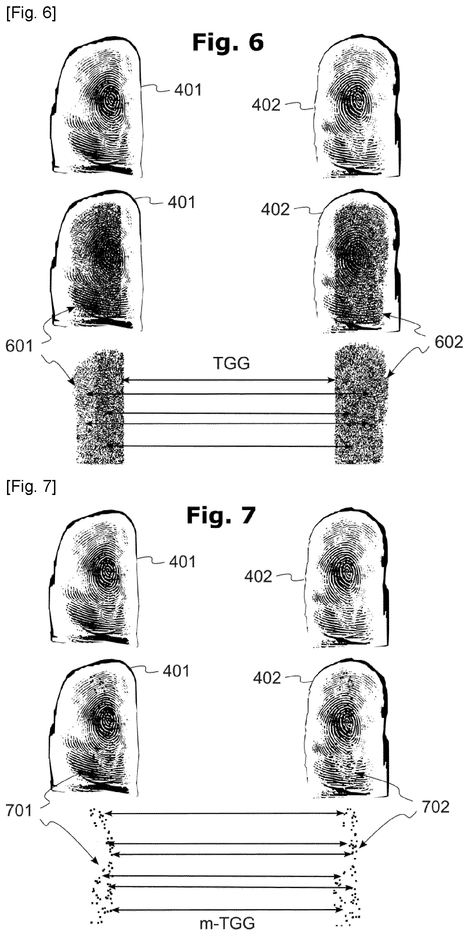

En référence à la **Fig. 7,** l'étape **503** consiste à sélectionner les points caractéristiques communs **701,**

**702** pour lesquels l'erreur résiduelle $\varepsilon$ est inférieure à une valeur de seuil donnée $\sigma$ ; autrement dit à éliminer les points caractéristiques communs **601, 602** dont la correspondance est incertaine. Ces points « incertains » sont susceptibles de constituer des artefacts lors la reconstruction de l'image panoramique d'un dactylogramme. Une valeur de seuil $\sigma$ pour l'erreur résiduelle $\varepsilon$ est préalablement définie, seuls les points caractéristiques communs **701, 702,** parmi l'ensemble des points caractéristiques communs **601, 602** entre les images **401, 402,** dont l'erreur résiduelle $\varepsilon$ est inférieure à la valeur de de seuil $\sigma$ sont conservés. Une valeur de seuil $\sigma$ peut varier selon la résolution des images **401, 402** et la précision souhaitée pour la reconstruction.

Selon certains modes de réalisation, la valeur de seuil $\sigma$ est définie par la somme quadratiques des erreurs résiduelles entre les positions des points caractéristiques communs **601, 602** associés entre les images **401, 402** lors de l'étape **502.** Cette somme peut être affecté d'un coefficient de sensibilité dont la valeur est comprise entre 0,5 et 1.

Cette définition de la valeur de seuil $\sigma$ peut être exprimée à l'aide de la relation suivante :

$$\sigma = \alpha \sum \big(\varepsilon(p_i, q_i)\big)^2$$

Où $\varepsilon(p_i, q_i)$ est l'erreur résiduelle entre les points caractéristiques communs $p_i$, $q_i$ associés entre les deux images **401, 402,** et $\alpha$ est un coefficient de sensibilité défini entre 1 et 0,5.

Une fois les points caractéristiques communs **701, 702** sélectionnés, il est déterminé une transformation géométrique globale modifiée **m-TGG** à partir de la transformation géométrique globale **TGG** de manière à associer uniquement les points caractéristiques communs sélectionnés **701, 702** entre les images **401, 402.** En d'autres termes, il s'agit de calculer à nouveau la transformation géométrique globale **TGG** telle que déterminée à l'étape **502,** mais uniquement sur la base des points caractéristiques communs sélectionnés **701, 702.** Cette transformation géométrique globale modifiée **m-TGG** est plus précise que la transformation géométrique globale **TGG** originale.

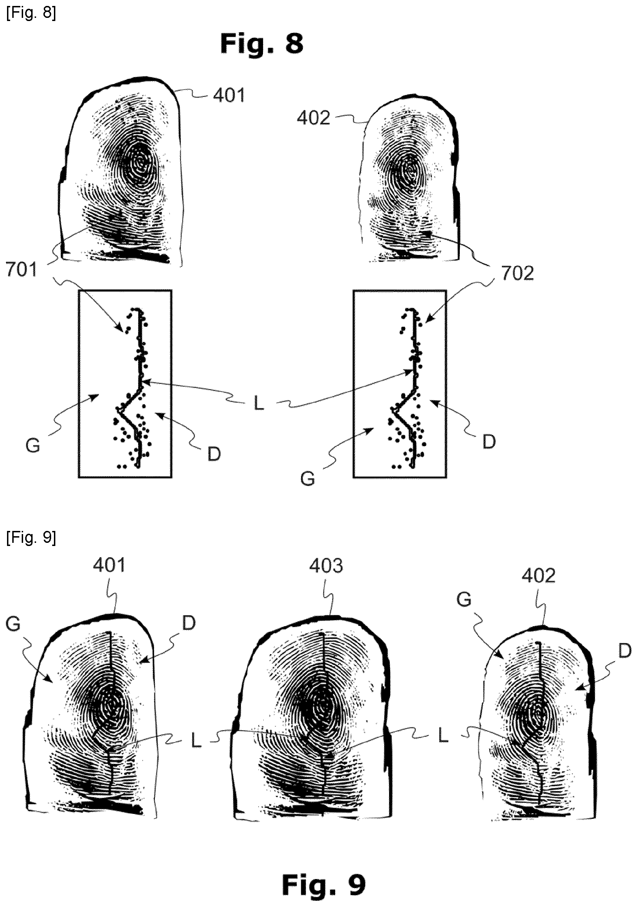

A l'étape **504,** en référence à la **Fig. 8,** pour chaque image **401, 402,** une ligne **L** de démarcation est déterminée. Cette ligne **L** de démarcation passe par les zones de l'image **401, 402** présentant la plus forte densité de points caractéristiques communs sélectionnés **701, 702.** En raison de la similitude des points caractéristiques communs sélectionnés **701, 702,** la position de ligne **L** de démarcation sur chaque image **401, 402** est sensiblement identique. Le dactylogramme représenté sur chaque image **401, 402** est divisé en une partie gauche **(G)** et une partie droite **(D)** par la ligne **L** de démarcation. De préférence, la ligne **L** de démarcation s'étend dans la direction de l'axe longitudinal **(A)** du doigt **300.**

Selon certains modes de réalisation, l'étape **504** comprend une sous-étape étape **504e** de calcul d'une carte de densité locale des points caractéristiques communs sélectionnés **701, 702** de chaque image **401, 402,** la ligne **L** de démarcation passe par les maxima de la carte de densité locale.

La carte de densité locale des points caractéristiques communs sélectionnés peut être calculée à l'aide de toute méthode adaptée telles qu'un estimateur de densité à noyau (« Kernel Density Estimator ») (Parzen 1962; Silverman 2018) ou un filtre à noyau convolutif (« Kernel Filter »). Un exemple de filtre à noyau convolutif qui peut être typiquement utilisé pour des images **401, 402** à 500 dpi est une matrice de sommation normalisée de taille 9x9.

Les cartes de densité locale fournissent une représentation des zones les plus denses en points caractéristiques communs sélectionnés permettant de localiser des points maxima. Ces points maxima permettent de définir un trajet pour une ligne **L** de démarcation le long de l'axe longitudinal **(A)** du doigt **300.**

A l'étape 506, en référence à la **Fig. 9,** les images **401, 402** sont jointes le long de la ligne **L** de démarcation au travers de l'application de la transformation géométrique globale modifiée **m-TGG** à l'étape **504.** Sur la **Fig. 9,** la jonction des images **401, 402** a pour conséquence la suppression de la partie (D) de l'image **401** et la partie gauche **(G)** de l'image **402** pour former une image reconstruite **403.**

Le procédé selon le premier aspect de l'invention est mis en œuvre par ordinateur. En référence à **Fig. 2,** un deuxième aspect de l'invention concerne un dispositif **200** de traitement de données comprenant des moyens pour la mise en œuvre d'un procédé **500** de reconstruction d'une image panoramique **403** d'un dactylogramme selon l'un des quelconques modes de réalisation du premier aspect de l'invention.

Le dispositif **200** de traitement de donné peut être intégré au dispositif **101** d'acquisition ou un dispositif rapporté en communication avec ledit dispositif **101** d'acquisition dans un environnement informatique distribué ou non.

Un troisième aspect de l'invention concerne un programme d'ordinateur ou module de programme d'ordinateur comprenant des instructions qui, lorsqu'elles sont exécutées par un dispositif **200** de traitement de données, conduisent ledit dispositif à mettre en œuvre un procédé **500** de reconstruction d'une image panoramique **403** d'un dactylogramme selon l'un des quelconques modes de réalisation du premier aspect de l'invention. Le programme peut être écrit en tout langage de programmation, compilé ou interprété. Ils peuvent faire partie d'une solution logicielle, c'est-à-dire d'une collection d'instructions exécutables, de codes, de scripts ou autres et/ou de bases de données.

Un quatrième aspect de l'invention concerne un procédé d'acquisition d'une image panoramique **403** d'un dactylogramme d'un doigt **300.** Le procédé comprend :

- Acquérir au moins deux images **401, 402** d'un dactylogramme d'un doigt **300** selon des angles de vue différents ;
- Construire une image panoramique **403** d'un dactylogramme à l'aide d'un procédé **500** de reconstruction d'une image panoramique **403** d'un dactylogramme selon l'un des quelconques modes de réalisation du premier aspect de l'invention.

A cet effet, le quatrième aspect de l'invention concerne un système **100** d'acquisition de dactylogramme comprenant :

- un dispositif **101** d'acquisition, de préférence sans contact, de dactylogrammes, configuré pour acquérir au moins deux images **401, 402** d'un doigt **300** selon des angles de vue différents ;
- un dispositif **200** de traitement de données selon le deuxième aspect de l'invention.

**Références**

Bay, Herbert, Tinne Tuytelaars, et Luc Van Gool. 2006. « SURF: Speeded up Robust Features ». In Lecture Notes in Computer Science, 404-17. Lecture Notes in Computer Science. Berlin, Heidelberg: Springer Berlin Heidelberg.

Bezot, Grégoire, Elise Le Gouil, Marine Peschaux, Joël-Yann Fourre, et Mokrane Malek. 2024. Dispositif de capture d'empreinte biométrique sans contact. EPO 4 303 837 A1. European Patent Application, filed 2 mai 2023, et issued 10 janvier 2024. https://patents.google.com/patent/EP4303837A1/fr?oq=EP+4303837A1+.

Chen, Jiansheng, et Yiu-Sang Moon. 2008. « Using SIFT features in palmprint authentication ». In 2008 19th International Conference on Pattern Recognition, 1-4. IEEE.

Chen, Yang, et Gérard Medioni. 1992. « Object Modelling by Registration of Multiple Range Images ». Image and Vision Computing 10 (3): 145-55.

Donato, Gianluca, et Serge Belongie. 2002. « Approximate thin plate spline mappings ». In Computer Vision - ECCV 2002, 21-31. Lecture notes in computer science. Berlin, Heidelberg: Springer Berlin Heidelberg.

Fischler, Martin A., et Robert C. Bolles. 1981. « Random Sample Consensus: A Paradigm for Model Fitting with Applications to Image Analysis and Automated Cartography ». Communications of the ACM 24 (6): 381-95.

Fourre, Joël-Yann, Jean Beaudet, et Alexis Sireta. 2022. Capteur et procédé d'acquisition biométrique sans contact. WIPO 2022253587A1. World Patent Application, filed 19 mai 2022, et issued 8 décembre 2022.

Fourre, Joël-Yann, Sylvaine Picard, François Rieul, et Jean-Christophe Fondeur. 2009. Dispositif d'acquisition d'empreintes digitales a la volee. WIPO 2009112717:A1. World Patent, filed 12 février 2009, et issued 17 septembre 2009.

Hanif, Muhammad Shehzad. 2019. « Patch Match Networks: Improved Two-Channel and Siamese Networks for Image Patch Matching ». Pattern Recognition Letters 120 (avril): 54-61.

Karami, Ebrahim, Siva Prasad, et Mohamed Shehata. 2017. « Image matching using SIFT, SURF, BRIEF and ORB: Performance comparison for distorted images ». arXiv [cs.CV].

Lowe, D. G. 1999. « Object recognition from local scale-invariant features ». In Proceedings of the Seventh IEEE International Conference on Computer Vision, 2:1150-57 vol.2. IEEE.

Ma, Jiayi, Xingyu Jiang, Aoxiang Fan, Junjun Jiang, et Junchi Yan. 2021. « Image Matching from Handcrafted to Deep Features: A Survey ». International Journal of Computer Vision 129 (1): 23-79.

Maillard, Sylvain, Olivier Poitelon, et Denis Dumont. 2022. Dispositif de capture biométrique. EPO 4 105 897 A1. European Patent Application, filed 11 mai 2022, et issued 21 décembre 2022.

Niaf, Emilie, et Fantin Girard. 2020. Procédé de reconstruction d'une image d'empreinte à partir de parties d'image. EPO 3 621 026 A1. European Patent Application, filed 29 août 2019, et issued 11 mars 2020.

Park, Unsang, Sharath Pankanti, et A. K. Jain. 2008. « Fingerprint verification using SIFT features ». In Biometric Technology for Human Identification V, édité par B. V. K. Vijaya Kumar, Salil Prabhakar, et Arun A. Ross. SPIE.

Parzen, E. 1962. « On estimation of a probability density function and mode ». Annals of Mathematical Statistics 33 (3): 1065-76.

Rahmes, Mark, Liam M. Mayron, et Josef Allen. 2010. Procédé de synthèse de modèles d'empreintes digitales et présentation des empreintes digitales en mosaïques au moyen d'un algorithme de mise en correspondance de points. WIPO 2010104885A1.

World Patent Application, filed 9 mars 2010, et issued 16 septembre 2010.

Russo, Anthony P. 2003. Method for combining fingerprint templates representing various sensed areas of a fingerprint to derive one fingerprint template representing the fingerprint. USPTO 6546122. US Patent, filed 29 juillet 1999, et issued 8 avril 2003.

Silverman, B. W. 2018. Density estimation for statistics and data analysis. Routledge.

Trouboul, Laurent. 2020. Capteur d'empreintes papillaires à lame mince. INPI FR3095535A1. French Patent Application, filed 25 avril 2019, et issued 30 octobre 2020.

Zhang, Zhengyou. 1994. « Iterative Point Matching for Registration of Free-Form Curves and Surfaces ». International Journal of Computer Vision 13 (2): 119-52.

**Revendications**

1. Procédé **(500),** mis en œuvre par un dispositif **(200)** de traitement de données, de reconstruction d'une image panoramique **(403)** d'un dactylogramme digital à partir d'au moins deux images **(401, 402)** d'un doigt **(300)** acquises selon des angles de vue différents, le procédé **(500)** comprend les étapes suivantes :

   (a) Déterminer **(501)** des points caractéristiques communs **(601, 602)** entre les deux images **(401, 402)** ;
   (b) Déterminer **(502)** une transformation géométrique globale **(TGG)** de manière à associer les points caractéristiques communs **(601, 602)** entre les images **(401, 402)** par minimisation d'une erreur résiduelle ($\varepsilon$) entre les positions desdits points caractéristiques communs **(601, 602)** entre les images **(401, 402)** ;
   (c) Sélectionner **(503)** les points caractéristiques communs **(701, 702)** pour lesquels l'erreur résiduelle ($\varepsilon$) est inférieure à une valeur de seuil donnée ($\sigma$) ;
   (d) Déterminer **(504),** à partir de la transformation géométrique globale **(TGG),** une transformation géométrique globale modifiée **(m-TGG)** de manière à associer uniquement les points caractéristiques communs sélectionnés **(701, 702)** ;
   (e) Déterminer **(505),** pour chaque image **(401, 402),** une ligne **(L)** de démarcation passant par les zones de l'image présentant la plus grande densité de points caractéristiques communs sélectionnés **(701, 702)** ;

   (f) Joindre **(506)** les images le long de la ligne **(L)** de démarcation en appliquant la transformation géométrique globale modifiée **(m-TGG)** pour former une image panoramique **(403).**

2. Procédé **(500)** selon la revendication 1, tel que l'étape **(504)** de transformation géométrique globale modifiée **(m-TGG)** comprend une sous-étape étape **(504e)** de calcul d'une carte de densité locale des points caractéristiques communs sélectionnés **(701, 702)** de chaque image **(401, 402),** la ligne **L** de démarcation passe par les maxima de la carte de densité locale.

3. Procédé **(500)** selon l'une quelconque des revendications 1 à 2, tel que la ligne **(L)** de démarcation s'étend dans la direction de l'axe longitudinal **(A)** du doigt **300.**

4. Procédé **(500)** selon l'une quelconque des revendications 1 à 3, tel que les angles de vue des images **(401, 402)** sont définis par rapport à l'axe longitudinal **(A)** du doigt **(300).**

5. Procédé **(500)** selon l'une quelconque des revendications 1 à 4, tel que la valeur de seuil ($\sigma$) est définie par la somme quadratiques des erreurs résiduelles entre les positions des points caractéristiques communs **(601), (602)** associés entre les images **(401, 402)** lors de l'étape **(502)** de détermination de la transformation géométrique globale **(TGG).**

6. Dispositif **(200)** de traitement de données comprenant des moyens pour la mise en œuvre d'un procédé **(500)** de reconstruction d'une image panoramique **(403)** d'un dactylogramme selon l'une quelconque des revendications 1 à 5.

7. Programme d'ordinateur comprenant des instructions qui, lorsqu'elles sont exécutées par un dispositif **(200)** de traitement de données, conduisent ledit dispositif à mettre en œuvre un procédé **(500)** de reconstruction d'une image panoramique **(403)** d'un dactylogramme selon l'une quelconque des revendications 1 à 6.

8. Procédé d'acquisition d'une image panoramique **(403)** d'un dactylogramme d'un doigt **(300),** le procédé comprend :

   - Acquérir au moins deux images **(401, 402)** d'un dactylogramme d'un doigt **(300)** selon des angles de vue différents ;
   - Construire une image panoramique **(403)** d'un dactylogramme à l'aide d'un procédé **(500)** de reconstruction d'une image panoramique **(403)** d'un dactylogramme selon l'une quelconque des revendications 1 à 5.

**9.** Système **(100)** d'acquisition de dactylogramme comprenant :

- un dispositif **(101)** d'acquisition, de préférence sans contact, de dactylogrammes, configuré pour acquérir au moins deux images **(401, 402)** d'un doigt **(300)** selon des angles de vue différents ;
- un dispositif **(200)** de traitement de données selon la revendication 6.

[Fig. 1]

**100**

Fig. 1

[Fig. 2]

**200**

Fig. 2

[Fig. 3]

**300**

Fig. 3

[Fig. 4]

Fig. 4

[Fig. 5]

**500**

**Fig. 5**

```
 _____        _____        _____
/   401    /  ───▶ |    501    | ◀───  \   402    \
‾‾‾‾‾‾‾‾‾‾‾         |_____|        ‾‾‾‾‾‾‾‾‾‾‾
                    │         │
                    ▼         ▼
              _____   _____
             /   601    /  /   602    /
             ‾‾‾‾‾‾‾‾‾‾‾   ‾‾‾‾‾‾‾‾‾‾‾
                    │         │
                    ▼
              |    502    |
              |_____|
                    │
                    ▼
               _____
              /   TGG    /
              ‾‾‾‾‾‾‾‾‾‾‾
                    │
                    ▼
              |    503    | ◀───  \   ε < σ   \
              |_____|        ‾‾‾‾‾‾‾‾‾‾‾
                    │
              ┌─────┴─────┐
              ▼           ▼
        _____   _____
       /   701    /  /   702    /
       ‾‾‾‾‾‾‾‾‾‾‾   ‾‾‾‾‾‾‾‾‾‾‾
                    │
                    ▼
              |    504    |
              |_____|
                    │
                    ▼
               _____
              / m-TGG    /
              ‾‾‾‾‾‾‾‾‾‾‾
                    │
                    ▼
              |    505    |
              |_____|
                    │
                    ▼
               _____
              /    L     /
              ‾‾‾‾‾‾‾‾‾‾‾
                    │
                    ▼
              |    506    |
              |_____|
                    │
                    ▼
               _____
              /   403    /
              ‾‾‾‾‾‾‾‾‾‾‾
```

[Fig. 6]

**Fig. 6**

401

402

401

402

601

602

TGG

[Fig. 7]

**Fig. 7**

401

402

401

402

701

702

m-TGG

[Fig. 8]

# Fig. 8

[Fig. 9]

# Fig. 9

EP 4 783 132 A1

| | Europäisches Patentamt European Patent Office Office européen des brevets | **RAPPORT DE RECHERCHE EUROPEENNE** | **Numéro de la demande**<br>**EP 25 19 1352** |

## DOCUMENTS CONSIDERES COMME PERTINENTS

| Catégorie | Citation du document avec indication, en cas de besoin,<br>des parties pertinentes | Revendication<br>concernée | CLASSEMENT DE LA<br>DEMANDE    (IPC) |
|---|---|---|---|
| A | EP 4 273 815 A1 (IDEMIA IDENTITY &<br>SECURITY FRANCE [FR])<br>8 novembre 2023 (2023-11-08)<br>* alinéa [0022] - alinéa [0135]; figures<br>1-4 *<br>----- | 1-9 | INV.<br>G06V40/12 |
| A | CN 104 268 542 A (UNIV TSINGHUA GRADUATE<br>SCHOOL) 7 janvier 2015 (2015-01-07)<br>* le document en entier *<br>----- | 1-9 | |
| | | | **DOMAINES TECHNIQUES<br>RECHERCHES  (IPC)**<br><br>G06V |

Le présent rapport a été établi pour toutes les revendications

| Lieu de la recherche | Date d'achèvement de la recherche | Examinateur |
|---|---|---|
| La Haye | 8 octobre 2025 | Thibault, Guillaume |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
..............................................................................
& : membre de la même famille, document  correspondant

EPO FORM 1503 03.82 (P04C02)

# EP 4 783 132 A1

**ANNEXE AU RAPPORT DE RECHERCHE EUROPEENNE
RELATIF A LA DEMANDE DE BREVET EUROPEEN NO.**

EP 25 19 1352

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-10-2025

| Document brevet cité au rapport de recherche | | Date de publication | Membre(s) de la famille de brevet(s) | | Date de publication |
|---|---|---|---|---|---|
| EP 4273815 | A1 | 08-11-2023 | AU | 2023202247 A1 | 23-11-2023 |
| | | | BR | 102023007257 A2 | 14-11-2023 |
| | | | CA | 3197893 A1 | 03-11-2023 |
| | | | CL | 2023001241 A1 | 20-10-2023 |
| | | | CO | 2023005257 A1 | 29-04-2024 |
| | | | EP | 4273815 A1 | 08-11-2023 |
| | | | FR | 3130427 A1 | 16-06-2023 |
| | | | US | 2023360428 A1 | 09-11-2023 |
| | | | ZA | 202304892 B | 28-08-2024 |
| CN 104268542 | A | 07-01-2015 | AUCUN | | |

Pour tout renseignement concernant cette annexe : voir Journal Officiel de l'Office européen des brevets, No.12/82

EPO FORM P0460

16

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 4303837 A1, Bezot, Grégoire, Elise Le Gouil, Marine Peschaux, Joël-Yann Fourre, et Mokrane Malek
- WO 2022253587 A1, Fourre, Joël-Yann, Jean Beaudet, et Alexis Sireta
- WO 2009112717 A1, Fourre, Joël-Yann, Sylvaine Picard, François Rieul, et Jean-Christophe Fondeur
- EP 4105897 A1, Maillard, Sylvain, Olivier Poitelon, et Denis Dumont
- EP 3621026 A1, Niaf, Emilie, et Fantin Girard
- WO 2010104885 A1, Rahmes, Mark, Liam M. Mayron, et Josef Allen
- US 6546122 B, Russo, Anthony P.
- FR 3095535 A1, Trouboul, Laurent

**Littérature non-brevet citée dans la description**

- SURF: Speeded up Robust Features. **BAY, HERBERT** ; **TINNE TUYTELAARS** ; **LUC VAN GOOL**. Lecture Notes in Computer Science. Springer, 2006, 404-17
- Using SIFT features in palmprint authentication. **CHEN, JIANSHENG** ; **YIU-SANG MOON**. 2008 19th International Conference on Pattern Recognition. IEEE., 2008, 1-4
- **CHEN, YANG** ; **GÉRARD MEDIONI**. Object Modelling by Registration of Multiple Range Images. *Image and Vision Computing*, 1992, vol. 10 (3), 145-55
- Approximate thin plate spline mappings. **DONATO, GIANLUCA** ; **SERGE BELONGIE**. Computer Vision - ECCV 2002. Springer, 2002, 21-31
- **FISCHLER, MARTIN A.** ; **ROBERT C. BOLLES**. Random Sample Consensus: A Paradigm for Model Fitting with Applications to Image Analysis and Automated Cartography. *Communications of the ACM*, 1981, vol. 24 (6), 381-95
- **HANIF, MUHAMMAD SHEHZAD**. Patch Match Networks: Improved Two-Channel and Siamese Networks for Image Patch Matching. *Pattern Recognition Letters*, May 2019, vol. 120, 54-61
- **KARAMI, EBRAHIM** ; **SIVA PRASAD** ; **MOHAMED SHEHATA**. Image matching using SIFT, SURF, BRIEF and ORB: Performance comparison for distorted images. *arXiv*, 2017
- Object recognition from local scale-invariant features. **LOWE, D. G.** Proceedings of the Seventh IEEE International Conference on Computer Vision. IEEE., 1999, vol. 2, 1150-57
- **MA, JIAYI** ; **XINGYU JIANG** ; **AOXIANG FAN** ; **JUNJUN JIANG** ; **JUNCHI YAN**. Image Matching from Handcrafted to Deep Features: A Survey. *International Journal of Computer Vision*, 2021, vol. 129 (1), 23-79
- Fingerprint verification using SIFT features. **PARK, UNSANG** ; **SHARATH PANKANTI** ; **A. K. JAIN**. Biometric Technology for Human Identification V. SPIE, 2008
- **PARZEN, E.** On estimation of a probability density function and mode. *Annals of Mathematical Statistics*, 1962, vol. 33 (3), 1065-76
- **SILVERMAN, B. W.** Density estimation for statistics and data analysis. *Routledge*, 2018
- **ZHANG, ZHENGYOU**. Iterative Point Matching for Registration of Free-Form Curves and Surfaces. *International Journal of Computer Vision*, 1994, vol. 13 (2), 119-52